# EUROPEAN PATENT SPECIFICATION

(11) **EP 0 930 021 B1**
(45) Date of publication and mention of the grant of the patent: **01.10.2003**
(21) Application number: 98203696.4
(22) Date of filing: 03.11.1998
(51) Int. Cl.: A23L 1/48, A23L 3/365, A23L 3/01

(54) **Plated meal with individually frozen ingredients**
Fertiggericht mit stückweise gefrorenen Bestandteilen
Plat cuisiné avec des ingrédients individuellement congelés

(30) Priority: 19.01.1998 GB 9801069
(43) Date of publication of application: 21.07.1999
(73) Proprietor: SOCIETE DES PRODUITS NESTLE S.A., 1800 Vevey (CH)
(72) Inventor: Olofsson, Mats, 26607 Hjärnarp (SE); Askman, Lars, 26050 Billesholm (SE)

(56) References cited:
- EP-A- 0 533 959
- EP-A- 0 835 615
- WO-A-96/28050
- GB-A- 1 327 422
- US-A- 4 081 646
- US-A- 4 210 674
- US-A- 4 929 456
- US-A- 5 077 066

## Description

The present invention relates to a plated frozen meal and to a method for preparing such a plated meal. In particular the invention relates to a plated frozen meal that comprises individually frozen ingredients.

It is known to use individually quick frozen ingredients in Stir-Fried meals. In such meals the ingredients are all of roughly the same size, e.g. 0.5 to 1 cm long pieces of vegetables and meat and generally not larger than 10 grams. For the preparation a pan is filled with the ingredients and heated while the ingredients are stirred. Such meals can be prepared rapidly, e.g. in 10 min., however, they require that the consumer -be involved during the preparation. For serving, the Stir-Fried meal is arranged on a plate.

From US 5, 077, 066 it is known to combine frozen food constituents and dried sauce concentrate in a tray and add water to the tray before heating in a microwave oven. During the preparation, the tray is removed from the microwave oven and the ingredients therein are stirred and subsequently subjected to the microwave heating power again. For serving the meal, the tray is emptied on a plate.

These previous meals comprising individually quick frozen (IQF) ingredients thus require manual involvement by the person preparing them.

Also known are plated meals consisting of IQF-ingredients upon which a liquid sauce is dosed. These meals provide an advantage in connection with the flexibility of the variation of the IQF-ingredients in the manufacturing thereof. Conventional IQF-meals may suffer from uneven heating properties when smaller and bigger pieces are heated together.

The invention aims to provide a ready-to-eat meal requiring as little as possible involvement by the consumer during its preparation. The aim of the invention is also to provide a meal which, for catering purposes, is convenient. A further aim is to provide a meal combining the above-described convenience where the heating of the ingredients is balanced so as to provide an even cooking thereof. In addition, the invention aims to provide a plated meal which has an appearance as if the ingredients had been heated individually and arranged in a plate.

Accordingly, in a first aspect, the invention relates to a plated frozen meal comprising a plate, a group of individually frozen carbohydrate Based ingredients and/or a group of individually frozen vegetable Based ingredients, and a group of individually frozen meat based ingredients and frozen sauce, wherein
said groups of ingredients are arranged on a plate at a location on which they substantially remain upon thawing and heating, and the sauce is in pellet form and being effective to even the heating of the other ingredients in the meal.

It has been found that the use of liquid sauce has the effect that it adjoins the IQF-ingredients as a consequence of which the ingredients agglomerate and freeze into blocks. This may result in increasing the time necessary for preparation thereof and thus may diminish the quick thawing and heating properties of the individually frozen ingredients. Furthermore, uneven heating of the ingredients may be a result affecting the quality of the meal.

Furthermore, it has been found that by organising the position of the ingredients in an appropriate manner, an even heating may be obtained. Due to the individual freezing of all the ingredients a rapid heating in comparison with prior plated meals may be obtained. The plated meal according to the invention may be heated from the frozen condition in about 30 to 45 min. in a conventional oven and in about 5 to 7 min in a microwave oven. In comparison a meal wherein liquid sauce is added onto the IQF-ingredients takes 8 to 10 min. in a microwave oven. Furthermore, it has surprisingly been found that the position of the sauce pellets may be effective for increasing the thawing and heating rate of the plated meal.

In the present context, the group of individually frozen predominantly meat based ingredients comprise e.g. meat, poultry, fish meat or other types of meat. The size of the ingredients ranges from 1 to 200 grams. The invention may be particularly useful for bigger IQF-ingredients such as whole chicken breasts or meat or fish fillets. Such IQF-ingredients may be from 50 to 200 gram portions. The invention may also be suitable for meals comprising IQF-ingredients in 20 to 50 gram portions. These sizes of ingredients are not present in conventional IQF-meals discussed above. In a specific embodiment of the invention this group of ingredients constitutes from 10 to 50% by weight of the whole meal

The group of individually frozen predominantly carbohydrate ingredients preferably comprises ingredients such as rice, pasta, potato etc.

The group of individually frozen predominantly vegetable ingredient preferably comprises carrot, peas, peppers, beans, wheat corns. Conveniently, the vegetables are blanched, for example to increase the food safety. The ingredients may be whole or cut into pieces. For example, the meal may comprise whole potatoes.

The ingredients may be pre-cooked or edible upon thawing. For ingredients, which require little cooking, such as fish meat or prawns, it may not be necessary to pre-cook.

Bigger IQF-pieces may also be part of the group of predominately vegetable or carbohydrate e.g. the meal may comprise an IQF-lasagne portion or an IQF-filled pancake.

As mentioned, it has surprisingly been found that the position of the sauce pellets may be effective for increasing the thawing and heating rate of the plated meal. The pellets preferably being from 1 to 10 grams. The sauce has a water content from 75 to 98% by weight, preferably from 75 to 95 %, advantageously about 90 % wt. It has been found that this may give a rapid thawing and heating of the sauce when subjected to microwave heating due to the effect the microwaves have on the water molecules of the sauce. The rapidly thawed and heated sauce may thus be used for assisting microwave thawing and heating of the ingredients if the sauce pellets are positioned abutting the other ingredients of the meal.

Sauce pellets in the plated meal are abutting individually frozen ingredients having the slowest thawing rate of the ingredients. In general, the ingredients in question will be those with a low water content such as e.g. meat, chicken or fish parts. Other parameters such as shape and salt content may also influence the thawing rate. The speed of thawing of the ingredients may also depend on the size thereof. The sauce pellets may also advantageously be positioned abutting to IQF-ingredients, which are bigger relative to other ingredients in the plate. In this way an even heating of the plated meal may be provided, even though the size and the type of ingredients varies.

Pellets of frozen sauce be layered with at least part of the group of individually frozen predominantly meat based ingredients as these ingredients thaw slower than the sauce. The sauce pellets and the predominantly meat based ingredients are layered so as to increase the contact surface between the sauce and the meat based ingredients upon thawing of the sauce, thus increasing the thawing and heating rate of the meat based ingredients. In one embodiment of the plated meal of the invention the sauce pellets are positioned above and/or beneath at least part of the group of individually frozen predominantly meat-based ingredients, to provide the contact between the ingredients and sauce as discussed above. In this embodiment, the invention may advantageously be used wherein the frozen, predominantly meat based ingredients constitute from 20 to 50% of the meal by weight, and wherein the meat based ingredient is one or more bigger pieces such as fillets of chicken, fish or meat or e.g. a hamburger of the ingredients.

Advantageously, the plate on which the meal is arranged is transparent to microwaves. This gives the quickest and most even cooking of the product in a microwave oven. Suitable material for the plate is a plastic material that withstands both freezing and heating in both a microwave and a conventional oven. Suitable materials are plastics or plastic/paper laminate e.g. crystalline polyester, paper coated with crystalline polyester, polypropylene etc

A particular convenience of the invention is the flexibility it provides. Due to the individually frozen state of the ingredient, i.e. the frozen sauce pellets and the individually frozen ingredients in each of the groups predominately being carbohydrates, vegetables and meat based, the same ingredients may be combined in various ways. However, the meal may not be assembled in a random manner, consideration should be given to the size and water content of the ingredients in order that an even cooking of the ingredients may be performed without stirring etc. Nevertheless, the fact that the ingredients are individually frozen makes it possible to make an on-line variation of the composition of the meal.

It will be appreciated that the meal of the present invention distinguishes food products wherein the size of the ingredients is substantially of equal size. That is e.g. stir-fried meals wherein the ingredients are e.g. 1 cm3. Also the invention is distinguished from packed food products of same type and same size, e.g. packs of even sized meatballs or vegetables. The meal of the invention is a full meal with a combination of ingredients as discussed above. The meal of the invention also distinguishes frozen meals consisting of some IQF-ingredients, which are frozen into a block with a frozen liquid sauce.

A method of preparing a plated meal for consumption comprises
providing a plate a group of individually frozen predominantly carbohydrate ingredients and/or a group of individually frozen predominantly vegetable ingredients, and a group of individually frozen predominantly meat based ingredients,
providing frozen sauce in pellet form, the sauce pellets being effective to even the heating of the other ingredients in the meal, and
preparing the meal so that the groups of meat based, vegetable and carbohydrate ingredients remain substantially in the same position on the plate.

The considerations regarding preferred composition of the meal discussed above, is also applicable to the method of the invention. Preferred preparation conditions will be discussed in the examples.

The invention will now be described in further details with reference to the drawings and examples, by example only, in which,
Fig. 1 shows a photo of a frozen meal with a liquid sauce,
Fig. 2 shows a photo of a meal of Fig. 1 prepared,
Fig. 3 shows a photo of a frozen plated meal according to the invention, and
Fig. 4 shows a photo of a plated meal of the invention shown in Fig. 3 which has been prepared.

The plated meals as shown in the Figures are prepared from:
A beef burger (pre-cooked) 90 grams
Potatoes 150 grams cut into up to 5 to 10 gram pieces (pre-cooked)
Béarnaise sauce 90 grams
Tomato sauce 60 grams
Total 390 grams

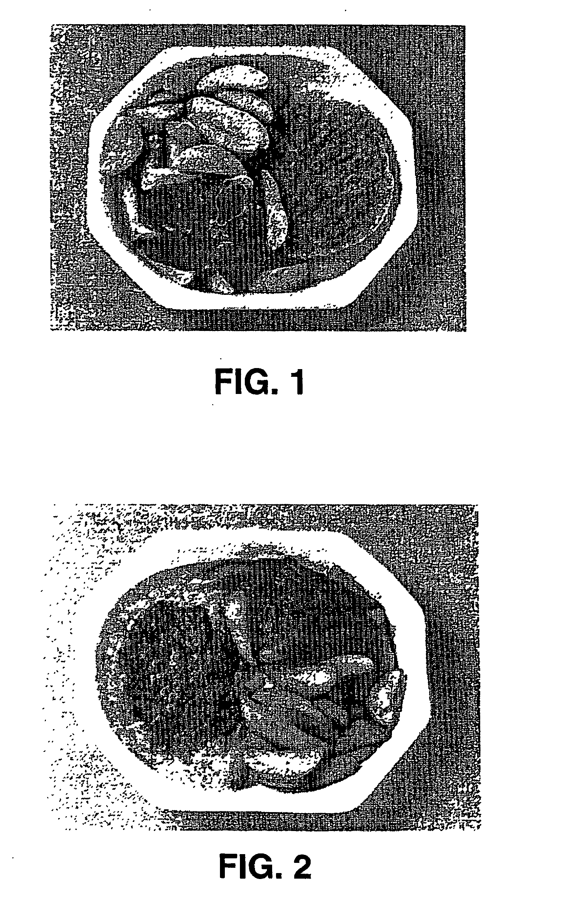

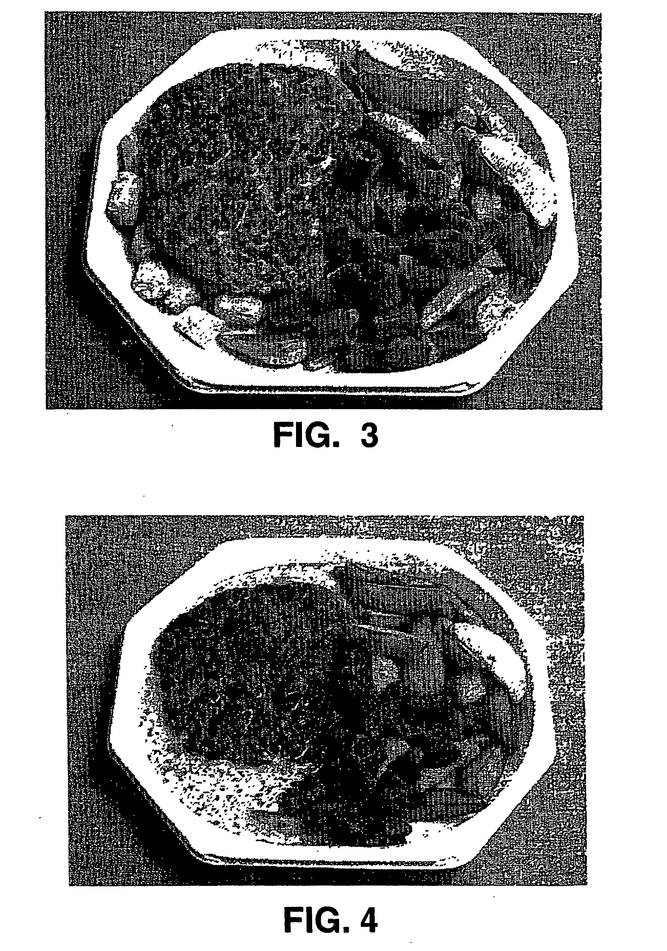

The beef burger and the potatoes are individually frozen and arranged side by side. In the plated meal shown in Fig. 1 the Béarnaise sauce and the tomato sauce are dosed in liquid form respectively around the beef burger and onto the potatoes and the frozen. In the plated meal in Fig. 3 the tomato sauce and the Béarnaise sauce are frozen into pellets. The frozen pellets are respectively arranged on the potatoes and around the beef burger. It follows that all the ingredients in the meal in Fig. 3 are IQF.

A couple of holes are made in the base of the place through which holes the temperature of the meal can be measured.

Cooking tests are performed in a Microwave oven (700W). A desirable minimum temperature of the meal ingredients is about 75 °C. The meals are heated until the coldest spot reaches this temperature. In these trials this is done by heating a number of meal different lengths of time and measuring the temperature at the coldest spot. For the present meals the coldest spot is the centre of the beef burger.

The plates are placed in the Microwave oven and cooked for a certain time. After end cooking the plates are left to rest. A resting time of 1 minute is applied after heating before the temperature is measured.

It was found that the Fig. 1 meal requires from 8.5 to 9 minutes heating before the centre of the beef burger is 75°C while the full IQF meal in Fig. 3 only requires 6,5 to 7 minutes to reach the same temperature. An even heating of the IQF meal of Fig. 3 was obtained in shorter time compared with the meal of Fig. 1.

Further it was found that the Béarnaise sauce in the IQF and the standard meal has been found to heat to about 110°C. The longer heating of the meal in Fig. 1 and 2 compared to that of Fig. 3 and 4, results in a separation of the emulsion of the fat and water in the two phases of the Béarnaise. A longer heating time may also be undesirable if other heat sensitive ingredients are part of the meal.

## Claims

1. A plated frozen meal for rapid and even heating by microwave energy comprising a plate, a group of individually frozen carbohydrate-based ingredients and/or a group of individually frozen vegetable-based ingredients, and a group of individually frozen meat-based ingredients and frozen sauce, wherein the groups of ingredients are arranged on a plate at a location on which they substantially remain upon thawing and heating, and the sauce is in pellet form
**characterised in that** the pellets of frozen sauce are abutting and layered with at least part of the group of individually frozen meat-based ingredients and the sauce pellets are positioned above and/or beneath at least the group of individually frozen meat-based ingredients and the sauce pellets have a water content from 75 to 98% by weight.

2. A plated frozen meal according to claim 1, plated on a plate of microwave transparent material.

3. A plated frozen meal according to claims 1 or 2, comprising at least one individually quick frozen ingredient at 50 grams or more.

4. A plated meal according to any of claims 1 to 3, which is individually packed.

## Patentansprüche

1. Gefrostetes Tellergericht für schnelles und gleichmäßiges Erhitzen mittels Mikrowellenenergie umfassend, einen Teller, eine Gruppe einzeln gefxosteter, auf Kohlenhydrat basierender Bestandteile und/oder eine Gruppe einzeln gefrosteter, auf Gemüse basierender Bestandteile, und eine Gruppe einzeln gefrosteter, auf Fleisch basierender Bestandteile und gefrostete Sauce, worin die Gruppen der Bestandteile an einem Ort auf dem Teller angeordnet sind, an dem sie während des Tauens und Erhitzens im wesentlichen verbleiben, wobei die Sauce in Tablettenform vorliegt, **dadurch gekennzeichnet, daß**
die Tabletten gefrosteter Sauce angrenzend sind und mit mindestens einem Teil der Gruppe einzeln gefrosteter auf Fleisch basierender Bestandteile geschichtet sind und die Sauce-Tabletten oberhalb und/oder unterhalb mindestens der Gruppe einzeln gefrosteter auf Fleisch basierender Bestandteile angeordnet sind und die Sauce-Tabletten einen Wassergehalt von 75-98 Gew.-% aufweisen.

2. Gefrostetes Tellergericht nach Anspruch 1, das auf einen Teller Mikrowellen durchlässig Materials gelegt ist.

3. Gefrostetes Tellergericht nach Anspruch 1 oder 2, umfassend mindestens einen einzeln schockgefrosteten Bestandteil mit 50 g oder mehr.

4. Gefrostetes Tellergericht nach einem der Ansprüche 1 bis 3, das einzeln verpackt ist.

## Revendications

1. Plat cuisiné congelé destiné à être réchauffé rapidement et de manière homogène par l'énergie des micro-ondes, comprenant une assiette, un groupe d'ingrédients à base d'hydrates de carbone congelés individuellement et/ou un groupe d'ingrédients à base de légumes congelés individuellement, un groupe d'ingrédients à base de viande congelés individuellement et de la sauce congelée, dans lequel les groupes d'ingrédients sont disposés sur une assiette de manière à ne pas bouger sensiblement lors de la décongélation et du réchauffement, et la sauce se présente sous la forme de pastilles, **caractérisé en ce que** les pastilles de sauce congelée sont contiguës à au moins une partie du groupe des ingrédients à base de viande individuellement congelés et disposées en couches pardessus et les pastilles de sauce sont positionnées au-dessus et/ou au-dessous d'au moins le groupe d'ingrédients à base de viande individuellement congelés et les pastilles de sauce présentent une teneur en eau variant entre 75 et 98 % en poids.

2. Plat cuisiné congelé selon la revendication 1, disposé sur une assiette faite dans un matériau pouvant aller dans un four à micro-ondes.

3. Plat cuisiné congelé selon la revendication 1 ou 2, comprenant au moins un ingrédient surgelé individuellement d'un poids de 50 grammes ou plus.

4. Plat cuisiné selon l'une quelconque des revendications 1 à 3, lequel est emballé individuellement.
